# EUROPEAN PATENT APPLICATION

(11) **EP 4 610 811 A1**
(43) Date of publication of application: **03.09.2025**
(21) Application number: 25161012.7
(22) Date of filing: 28.02.2025
(51) Int. Cl.: G06F 8/53, G06F 21/57, G06N 3/045

(54) **DETERMINING SOURCE CODE OF A SOFTWARE CODE**

(30) Priority: 28.02.2024 US 202418589818
(71) Applicant: Cylance Inc., Plano, TX 75024 (US)
(72) Inventor: COLLADO UMANA, Julian, Waterloo, ON, N2K 0A7 (CA); FIENBERG, Aaron Mark Tresch, Waterloo, ON, N2K 0A7 (CA)
(74) Representative: MERH-IP Matias Erny Reichl Hoffmann Patentanwälte PartG mbB

(57) **Abstract**

Systems, methods, and software can be used to determine source code of a software code. In some aspects, a method includes: processing a binary code by using a file encoder model to obtain a file embedding vector; and selecting one or more source code samples based on the file embedding vector and a distance function.

## Description

### CROSS-REFERENCE TO RELATED APPLICATIONS

This application claims the priority of U.S. Non-provisional Utility Patent Application No. 18/589,818, filed on 28.02.2024, (Attorney Docket No. 29717-2369001), which is hereby incorporated by reference in its entirety.

### TECHNICAL FIELD

The present disclosure relates to determining the source code of a software code.

### BACKGROUND

In some cases, a binary software code may be analyzed to determine various aspects of the software code. For example, the binary software code may be analyzed to determine the security risks in the binary software code. The security risks may include the possible presence of malware in the binary software code. However, the source code version of the binary software code to be analyzed may not be available.

### DESCRIPTION OF DRAWINGS

FIG. 1 is a schematic diagram showing an example system that determines the source code of a software code, according to an implementation.
FIG. 2 is a flowchart showing an example operation for determining the source code of a software code, according to an implementation.
FIG. 3 illustrates example training processes of the file encoder model, according to an implementation.
FIG. 4 is a flowchart showing an example method for determining the source code of a software code, according to an implementation.
FIG. 5 is a flowchart showing an example method for generating source code by using LLM, according to an implementation.
FIG. 6 illustrates example training processes of the LLM, according to an implementation.
FIG. 7 illustrates a high-level architecture block diagram of a computer according to an implementation.

Like reference numbers and designations in the various drawings indicate like elements.

### DETAILED DESCRIPTION

In some cases, the source code of an unknown binary code may not be available since the file has already been compiled and this is a non-reversible process. In some implementations, special programs called decompilers can be used to process the binary code to obtain an approximate version of the source code.

In some implementations, a generative artificial intelligence (AI) language model can be used as a decompiler by conditioning the model on an embedded representation of the binary code in order to bias the model and obtain better results.

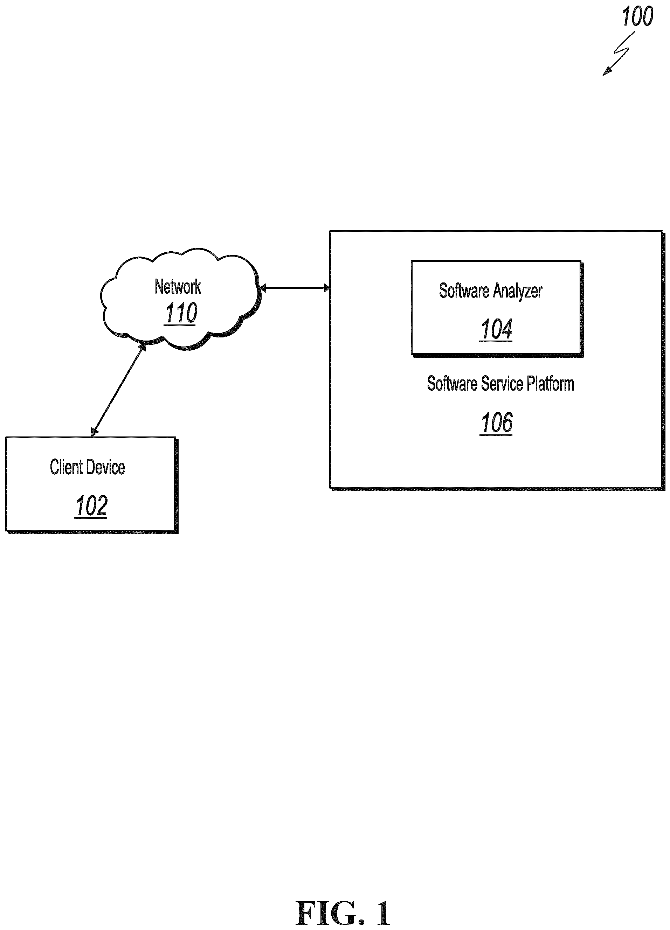

In some cases, the unknown binary code and the existing source code can be embedded in a common latent space. Specifically, a file encoder model processes the unknown binary code to generate a file embedding vector. The file encoder model is pre-trained based on a training set of binary-source code pairs. A natural language model processes the existing source code to generate source code embedding vectors. The file embedding vector and the source code embedding vectors have the same dimension. A distance function can be used to select the source code embedding vectors that are closet to the file embedding vector. By using a trainable semantic embedding of binary code combined with a natural language model, source codes of an unknown binary code can be determined. Additionally or alternatively, an LLM can be used to generate source code based on the file embedding vector. FIGS. 1-7 and associated descriptions provide additional details of these implementations.

FIG. 1 is a schematic diagram showing an example system 100 that determines source code of a software code, according to an implementation. At a high level, the example system 100 includes a software service platform 106 that is communicatively coupled with a client device 102 over a network 110.

The client device 102 represents an electronic device that provides the software code to be analyzed. In some cases, the client device 102 can send the software code to the software service platform 106 for source code analysis. In some cases, the software service platform 106 can send the output of the source code analysis to the client device 102.

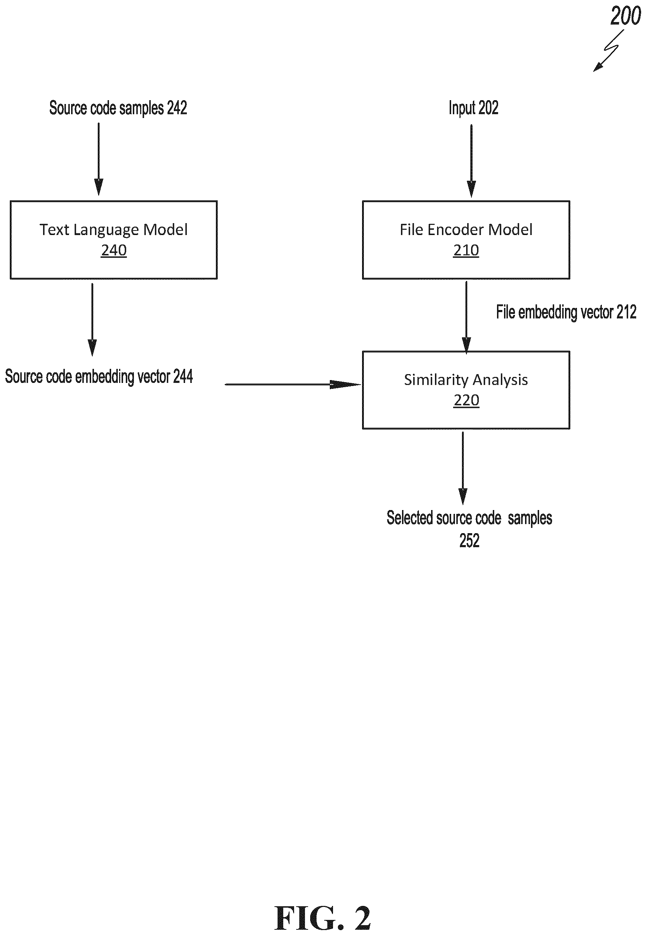

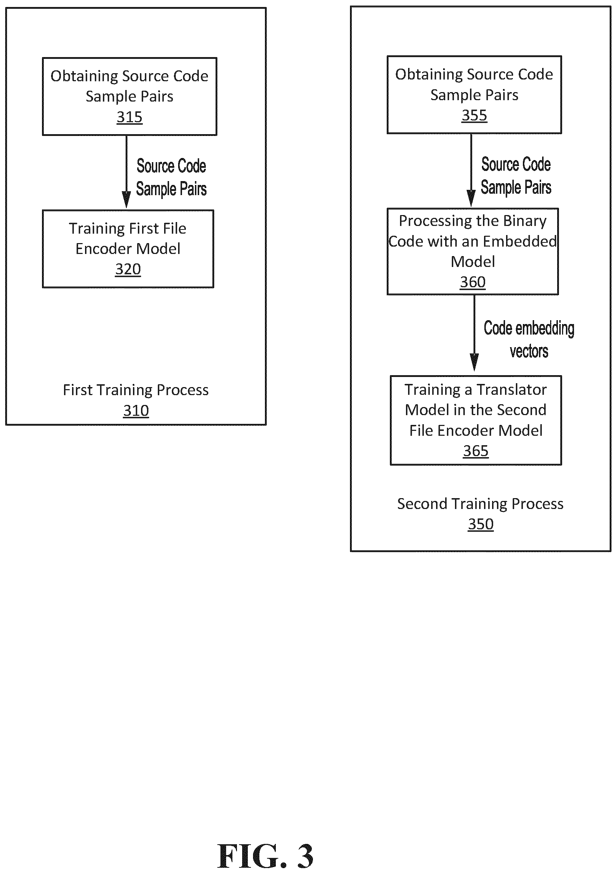

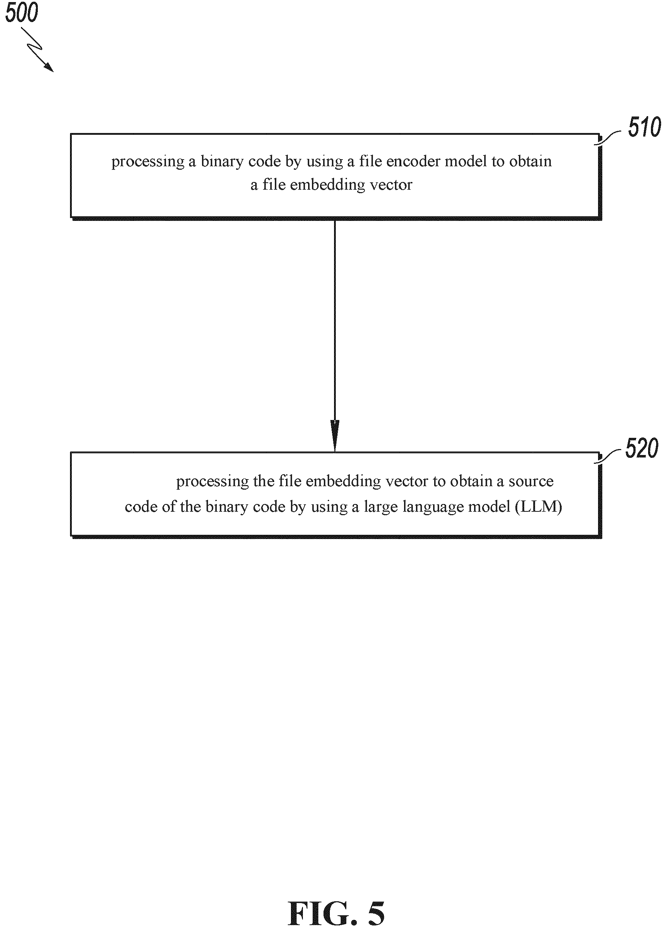

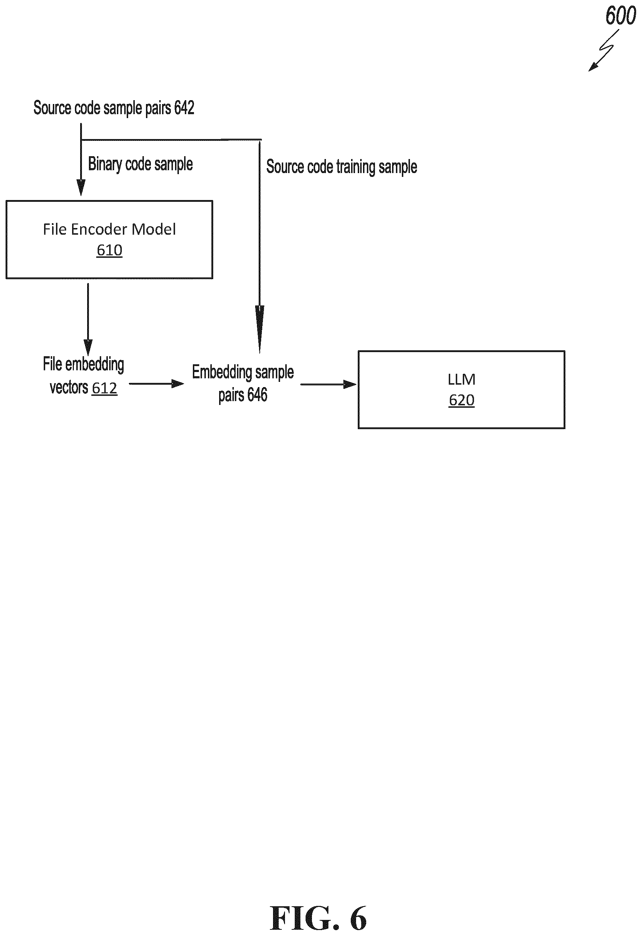

The software service platform 106 represents an application, a set of applications, software, software modules, hardware, or any combination thereof, that determines source code. The software service platform 106 can be an application server, a service provider, or any other network entity. The software service platform 106 can be implemented using one or more computers, computer servers, or a cloud-computing platform. The software service platform 106 can be used to train machine learning models that are used in the source code analysis, e.g., the training process discussed in FIG. 3 and FIG. 6 and associated descriptions. The software service platform 106 includes a software analyzer 104. The software analyzer 104 represents an application, a set of applications, software, software modules, hardware, or any combination thereof, that determines source code of a software code. In some implementations, the software analyzer 104 can generate a file embedding vector of the software code, and use a machine learning model to select source codes that are stored in a data lake of source codes. FIGS. 2-4 and associated descriptions provide additional details of these implementations. In some cases, the software analyzer 104 can also use a large language model to generate source codes based on the file embedding vector. FIGS. 5-6 and associated descriptions provide additional details of these implementations.

The software code can be binary code. In a software development process, source code can be created by programmers using a text editor or a visual programming tool prior to compilation. The source code can be developed with a human-readable programming language and may be saved in a text file. The source code can be transformed by an assembler or a compiler into binary software code that can be executed by the computer. In some cases, the source code can be generated by automated tools, e.g., artificial intelligence powered by large language models.

The binary software code can include a stream of bytes that are generated by compiling the source code. Thus, the binary software code may not be in a human-readable format and may not be easily parsed or analyzed by a human.

The binary software code can be in a configuration of object code, executable code, or bytecode. An object code is the product of compiler output of a sequence of statements or instructions in a computer language. The source code can be logically divided into multiple source files. Each source file is compiled independently into a corresponding object file that includes an object code. The object codes in the object files are binary machine codes, but they may not be ready to be executed. The object files can include incomplete references to subroutines outside themselves and placeholder addresses. During the linking process, these object files can be linked together to form one executable file that includes executable code that can be executed on a computing device. During the linking process, the linker can read the object files, resolve references between them, perform the final code layout in the memory that determines the addresses for the blocks of code and data, fix up the placeholder addresses with real addresses, and write out the executable file that contains the executable code.

A bytecode, also referred to as portable code or p-code, is a form of instruction set designed for efficient execution by a software interpreter. Bytecodes include compact numeric codes, constants, and references (normally numeric addresses) that encode the result of compiler parsing and perform semantic analysis of things like type, scope, and nesting depths of program objects. The bytecode includes instruction sets that have one-byte opcodes followed by optional parameters. Intermediate representations, such as the bytecode, may be output by programming language implementations to ease interpretation or may be used to reduce hardware and operating system dependence by allowing the same code to run cross-platform, on different devices. The bytecode may often be either directly executed on a virtual machine (a p-code machine i.e., interpreter), or it may be further compiled into machine code for better performance. In some cases, binary software code that is coded using platform-independent languages such as JAVA can be stored in the bytecode format.

The software analysis can be performed for malware descriptions. In this example, the data lake of the source codes includes source codes related to malware. These source codes can be obtained from different sources, including e.g., academic paper, books, blog posts, incident reports, technical analysis, forum discussions, etc. The software service platform 106 can select the source code that are resembles the binary software code and provide the source code for further analysis. In some cases, the software service platform 106 can use a large language model (LLM) to further process the selected source code to generate a text description about the malware risk in the binary software code.

Applications for software analysis are not limited to malware detection. Additionally or alternatively, the source code analysis can be performed for other purposes.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example operation 200 for determining the source code of a software code, according to an implementation. The example operation 200 can be implemented by a software service platform, e.g., the software service platform 106 shown in FIG. 1. The example operation 200 shown in FIG. 2 can be implemented using additional, fewer, or different operations, which can be performed in the order shown or in a different order.

As illustrated in FIG. 2, an input 202 is processed by a file encoder model 210 to generate a file embedding vector 212.

The input 202 can be a software code, e.g., a document file, an executable code, or a script. In some cases, the input 202 can be a binary code. In some cases, the input 202 can also include source code in addition to binary code. For example, the input 202 can be a binary code to be analyzed for a natural language description regarding the aspects of potential security risks in the code. The input 202 can also be other forms of files to be evaluated in a software code analysis.

The file encoder model 210 is a machine learning model that generates the file embedding vector from an input file. For example, the file encoder model 210 can be configured as a neural network, e.g., a multilayer perceptron (MLP) or a convolutional neural network (CNN). In this case, the file encoder model 210 may include at least one neural network layer, e.g., at least one fully connected layer or convolutional layer or transformers. Alternatively or additionally, the file encoder model 210 may be a graph neural network, a recurrent neural network, other machine learning models, or any combinations thereof. In the case of multiple neural network layers, they may be stacked, so as to pass data successively between them in a certain layer order. Each neuron in one layer is connected to some or all neurons in the next layer.

In some cases, the file encoder model 210 can include the following layers: an input layer that takes input vectors and passes them to the rest of the network; one or more hidden layers that are intermediate layers between the input and output layer and process the data by applying complex non-linear functions to them, and an output layer that takes as input the processed data and produces the final results.

The hidden layers transform the input features into processed features. Each layer is implemented by using mathematical functions that apply weights to the input to produce an output specific to an intended result. In some cases, hidden layers can be implemented in a hierarchical way, where each layer in the hidden layers is specialized in producing one transformation for a target result and passes the output values to the next layer for further processing.

FIG. 3 illustrates example training processes of the file encoder model, according to an implementation. FIG. 3 describes two training processes 310 and 350 for two different file encoder models.

The first training process 310 starts with step 315, where the source code sample pairs are obtained. A source code sample pair includes a source code training sample and a binary code sample. The source code training sample is the source code version of the binary code sample. In some implementations, the source code sample pair can be generated by compiling the source code training sample to obtain the corresponding binary code sample. In some cases, these source code training samples are software code that relates to different types of malware. These samples can be obtained from different sources that discuss malware, including e.g., books, blog posts, incident reports, academic papers, technical analysis authored by threat researchers, or even forum discussions. Multiple source code sample pairs are obtained and formed the training dataset. In a variant, a source code training sample can be associated with a plurality of binary code samples that are obtained by applying several obfuscation techniques. For example, a first binary code sample can be obtained by using a first compiling tool applied on the source code training sample. Then a second binary code sample can be obtained by processing the first binary code sample by inserting dummy or "junk" instructions into the first binary code sample. Therefore, from a first source code sample pair comprising a source code training sample and a binary code sample, it is possible to obtain a plurality of pairs. Indeed, as an obfuscation technique applied on a binary code sample is a technique that consists in altering the original structure and maintaining its original functionality, there are several ways to obfuscate a binary code sample. In another variant, some obfuscation techniques can be rather applied directly on the source code training sample instead of applying obfuscation techniques on the binary code sample. In another variant, the obfuscation techniques are applied to both the source code training sample and the binary code sample to generate a specific source code sample pair. All these variants enable to increase the size of the training dataset.

At step 320, the training dataset of source code sample pairs is used to train the first file encoder model. In some cases, contrastive learning can be used to train the file encoder. In one example, a text language model is used to generate a source code embedding vector from the source code training sample of the source code sample pair. The text language model can be a general-purpose language model, e.g., transformer encoder models such as Bidirectional Encoder Representations from Transformers (BERT), XLNet, or MPNet. The text language model can also be a language model specialized for software analysis or cyber security analysis, e.g., CodeBERT, SecureBERT or SecRoBERTa

The first file encoder model is trained to generate a file embedding vector from a binary code input. The dimension of the file embedding vector is set to be the same dimension as that of the source code embedding vector generated by the text language model. The objective of the training is to make the file embedding vector generated based on a binary code to be close to the source code embedding vector generated from the corresponding source code but far from the source code embedding vector generated from other source code. In one example training operation, a batch of N source code sample pairs is used. The N source code sample pairs include N source code training samples. These source code training samples are processed by the text language model described previously to generate N source code embedding vectors, denoted as Cⱼ, j=1... N. The N source code sample pairs include N binary code samples. These binary code samples are processed by the first file encoder model to generate N file embedding vectors, denoted as Fᵢ, i=1... N. An NxN matrix M of pairwise dot products between Fᵢ and Cⱼ is calculated. The diagonal elements of M hold dot products between related elements, and the off-diagonal elements of M hold dot products between unrelated elements. Each row of M is then passed through a softmax function. The logarithm of the diagonal elements of M (after the softmax) is taken as the loss function to be optimized during the training process. The first file encoder model can be trained in an iterative operation. The parameters of the first file encoder model can be initialized to generate the first iteration of Fᵢ. The matrix M can be calculated and the logarithm of the diagonal elements of M is used as the loss function to optimize the first file encoder model for the next iteration. The process repeats until a stopping criteria is met. The stopping criteria can be configured. In some cases, the stopping criteria can be a number of training iterations performed. Additionally or alternatively, a validation set can be used to test the model and determine validation loss. The training process can stop when the validation loss stops improving.

In this operation, the same source code embedding vectors Cⱼ can be used in each iteration because the text language model is not changed while the first file encoder model is trained. Alternatively, the text language model can also be fine tuned during the training and the source code embedding vectors Cⱼ are generated in each iteration.

In some operations, different text language models can be used to select a suitable text language model. For example, a first candidate text language model can be used to complete the first training process 310 and obtain a first version of the file encoder model. The first training process 310 can be repeated by using a second candidate text language model. In this case, the second candidate text language model is used to generate Cⱼ from the same N source code training samples in the same N source code sample pairs. The Cⱼ will be different because a different candidate text language model is used. As a result, a second version of the first file encoder model can be obtained at the end of the training. This process can be repeated by using a third candidate text language model to generate a third version of the first file encoder model. Different versions of the first file encoder model can be compared to select the best version of the first file encoder model. The candidate text language model that corresponds to the best version of the first file encoder model is selected to be the suitable text language model.

In one example, an evaluation set of software code sample pairs can be used to determine which version of the first file encoder model is the best. The evaluation set of software code sample pairs is different from the training set of software code sample pairs. For each pair in the evaluation set of software code sample pairs, the binary code sample is processed by each version of the first file encoder model to generate a file embedding vector, the corresponding source code training sample is processed by candidate text language models corresponding to each version of the first file encoder model to generate a source code embedding vector. The distance between the file embedding vector and the source code embedding vector is calculated. The distance of each pair in the evaluation set of software code sample pairs can be averaged, and the version of the first file encoder model having the smallest average distance is selected to be the best version of the first file encoder model. Alternatively or additionally, the metric to select the model can include loss value according to the loss function discussed previously. For example, the model that produces the lowest loss value on the evaluation set can be selected.

In some cases, there may not be a large number of software code sample pairs that are available. For example, there may be only a few software codes that relate to a particular type of malware. In this case, the number of the software code sample pairs may be too limited to produce a high-quality model. In this case, a fine-tuning approach can be applied.

The second training process 350 illustrates the process of training a second file encoder model. The second file encoder model includes an embedding model that is connected with a translator model.

The embedding model is pretrained to generate code embedding vectors from a binary code. The training of the embedding model is not related to the source code analysis process discussed previously. For example, the embedding model can be pretrained for feature extraction. Examples of features can include file size, file format, file type (e.g., whether the software code is binary or source code), file content (part or all of the software code), associated operating system or programming environment, the number of particular strings included in the code, the structure of the code (e.g., the order of a set of instructions), the identity and the number of particular subroutines, signature, checksum, and etc. The embedding model can also be part of a classifier, e.g., a software family classifier or a malware classifier. The software family classifier or the malware classifier can include one or more layers that convert a binary code input into embedding vectors and a classification layer that produces a class label for the binary code, e.g., a software family class or a malware class. In this case, the embedding model can include the layers that produce the embedding vector prior to the classification layer. The embedding model can be implemented by using MLPs, transformers, CNNs, graph neural networks, or other machine learning models. Because the embedding model is pretrained on a large dataset that may include binary codes without corresponding source code, it can generate high quality embedding vectors from the binary code. The performance of the second file encoder model can be improved because it indirectly incorporates the potentially much larger dataset used to train the embedding model.

The second training process 350 starts with step 355, where the source code sample pairs are obtained. This process is similar to step 315, wherein the training set of source code sample pairs is obtained. Each source code sample pair includes a source code training sample and a corresponding binary code sample. As for the step 315, data augmentation can be done by using obfuscation techniques.

At step 360, the embedding model is used to process the N binary code samples to generate N code embedding vectors.

At step 365, the translator model in the second file encoder model is trained. The translator model maps from the space of the embedded files to the space of the embedded source code. In some cases, the translator model can be implemented as a linear projection function that projects the code embedding vectors to the dimensionality of the file embedding vectors. As discussed previously, the dimensionality of the file embedding vectors is the same as the dimensionality of the text language model. On the other hand, the dimensionality of the code embedding vectors is set by the embedding model used in step 360. Therefore, they may have different dimensionality. Alternatively or additionally, the translator model can be implemented as a multilayer perceptron (MLP), with one or more hidden layers and nonlinear activation functions.

Similarly to first training process 310, contrastive learning can be used in the second training process 350. For the training set of N software code sample pairs, the text language model is used to generate N source code embedding vectors, denoted as Cⱼ, j=1... N. The N binary code samples are processed with the embedded model to generate N code embedding vectors at step 360. The N code embedding vectors are processed by the translator model to generate N file embedding vectors, denoted as Fᵢ, i=1... N. The NxN matrix M of pairwise dot products between Fᵢ and Cⱼ is calculated. The translator model in the second file encoder model can be trained in an iterative operation to optimize the logarithm of the diagonal elements of M. The process repeats until a stopping criteria is met.

In this operation, the same embedding model is used and only the translator model is optimized. Alternatively or in combination, both the parameters in the embedding model and the parameters in the translator model can be updated together during the training.

Alternatively or in combination, different embedding models can be used to select a suitable embedding model, similarly to selecting different text language models as discussed previously. The second training process 350 is repeated for each candidate embedding model to train a corresponding translator model, without updating the parameters of the candidate embedding model during the training. An evaluation set is used to compare the performance of different versions of the second file encoder model, each version including a candidate embedding model and a corresponding translator model. The version that has the best performance is selected.

Alternatively or in combination, the second training process 350 can be repeated for different candidate text language models to select the suitable text language model as discussed previously.

Returning to FIG. 2, at 220, a similarity analysis is performed to select one or more source code samples. The similarity analysis takes the input of the file embedding vector 212 that is generated based by the file encoder model 210 (e.g., the first file encoder model or the second file encoder model discussed in FIG. 3 and associated descriptions) on the input 202. The similarity analysis also takes the input of a set of source code embedding vectors 244. The similarity analysis uses a distance function to select one or more source code embedding vectors among the source code embedding vectors 244 that are closet to the file embedding vector 212.

The source code embedding vectors 244 are generated by the text language model 240. The text language model 240 is the same text language model described in FIG. 3 and associated descriptions. The text language model 240 processes the source code samples 242 to generate the source code embedding vectors 244. The source code samples 242 are the source code version of software code. For example, the source code samples 242 can be example source codes that contain security risks.

In some operations, the source code embedding vectors 244 can be generated prior to runtime. For example, the source code embedding vectors 244 can be stored on the software service platform or a data storage accessible to the software service platform prior to receiving the input 202.

In some cases, k-nearest neighbors algorithm (k-NN) can be used to perform the similarity analysis. In an example k-NN algorithm, the distance between the input data point and indices of the training examples is calculated. Examples of the distance function used for the calculation can be Euclidean distance, Hamming distance, or other metrics, including, e.g., cosine similarity. The k-nearest neighbors to the input data point are identified. The k-NN algorithm used to perform the similarity analysis can be an exact k-NN algorithm or an approximate k-NN algorithm.

In these operations, the source code embedding vectors 244 are used as the indices of the training examples for the k-NN model. The file embedding vector 212 is used as the input data point to the k-NN model. The distance between the file embedding vector 212 and each index in the source code embedding vectors 244 is calculated. A set of selected source code embedding vectors is determined based on the distances. In some cases, the set of selected source code embedding vectors are the k indices that have the shortest distance to the file embedding vector 212. In some cases, the number k can be configured. Alternatively or in combination, a distance threshold can be configured and the source code embedding vectors having the distance below the distance threshold can be selected. In some cases, nominal distance, or normalized distance, e.g., distance normalized based on the dimension of the vector, can be used as the distance threshold. The thresholds, e.g., the number of k or the distance threshold can be configured by a user, an administrator, or other operation personnel or algorithms.

In some cases, Locality Sensitive Hashing (LSH) can be performed before the k-NN algorithm or as an alternative to the k-NN algorithm to select the source code embedding vectors. Alternatively or in combination, a cross encoder can be implemented to augment the vector search result. A cross encoder can be a specialized model that takes as input both the source code features (e.g., represented by source code embedding vectors) and the file features (e.g., represented by the file embedding vectors) and processes them jointly to produce a ranking score. The cross encoder can be implemented by using a neural network, e.g., a transformer or an MLP. The ranking score is then used to select the most relevant source code samples among the ones returned by the k-NN search.

The selected source code embedding vectors are converted to the selected source code samples 252. In some cases, the selected source code samples 252 are the source code samples that correspond to the selected source code embedding vectors. In some cases, both the source code samples 242 and the source code embedding vectors 244 are stored on the software service platform together with a mapping relationship between them. The mapping relationship can be stored as a mapping table, a mapping list, a mapping index, or other forms. The software service platform can search the mapping relationship to determine the selected source code samples 252 corresponding to the selected source code embedding vectors.

In some cases, additional search of source code samples can be triggered automatically during or after the similarity analysis 220. For example, if the minimum distance between the file embedding vector 212 and the selected source code embedding vectors during the k-NN search is larger than a threshold, this may indicate that there may not be a source code sample in the data lake that is closely related to the input 202, including the selected source code samples 252. In this case, an additional search can be triggered to search additional source codes that may be relevant to the input 202. The additional search can be performed on the Internet or intranet. The selected source code samples 252 can be used to generate key words for the additional search. The descriptions that are found by the additional search can be processed by the text language model 240 to generate additional source code embedding vectors that are inputted to the similarity analysis 220 to select additional source code samples based on the process described previously.

In some cases, the selected source code samples 252 can be outputted at the user interface of the software service platform that performs the analysis. In some cases, other information of the selection process, e.g., the distance information, the threshold, can also be provided. Alternatively or additionally, the selected source code samples 252 can be sent to a different device for outputting. Other information, e.g., the distance information, the threshold, can also be sent to the different device.

In some cases, in addition or as an alternatively to just outputting the selected source code samples 252, a large language model (LLM) can be used to process the selected source code samples 252 to generate a text description. In some cases, a source code may not be easy to understand by a user. The LLM can process these source code samples 252 and generate one text description that is easy to read. The text description can include a description of the input 202 that is based on the selected source code samples 252, e.g., a summary. In some cases, the LLM can be trained on source code instead of natural language. FIGs 5-6 and associated descriptions provide additional details of these implementations.

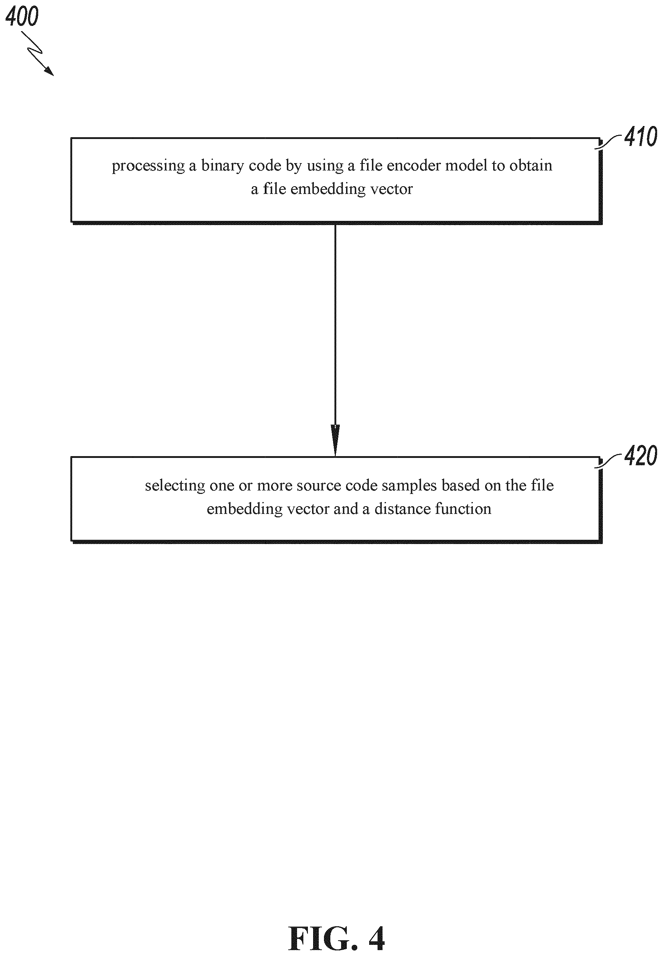

FIG. 4 is a flowchart showing an example method 400 for determining source code of a software code, according to an implementation. The example method 400 can be implemented by a server, e.g., the software service platform 106 shown in FIG. 1. The example method 400 shown in FIG. 4 can be implemented using additional, fewer, or different operations, which can be performed in the order shown or in a different order.

At 410, a binary code is processed by using a file encoder model to obtain a file embedding vector. At 420, one or more source code samples are selected based on the file embedding vector and a distance function.

As discussed previously, in some cases, an LLM can be used to process the selected source code samples 252 to generate a text description. An LLM is a machine learning model that is trained to generate natural languages in response to inputs. In some cases, an LLM can use a tokenization process to convert the input text into a series of tokens and generate a response by repeatedly predicting the next token or word. For example, the input text can be a question in natural language, and the LLM can produce a response to the question in natural language. In some cases, the LLM can be used to provide a user-friendly interface to process inputs. For example, a user can feed an article to the LLM and ask the LLM to provide a summary of the article.

In some cases, the LLM can also be trained to produce source code instead of natural language. FIG. 5 is a flowchart showing an example method 500 for generating source code by using LLM, according to an implementation. The example method 500 can be implemented by a server, e.g., the software service platform 106 shown in FIG. 1. The example method 500 shown in FIG. 5 can be implemented using additional, fewer, or different operations, which can be performed in the order shown or in a different order.

At 510, a binary code is processed by using a file encoder model to obtain a file embedding vector. This process is similar to the file embedding vector discussed previously in FIGs 2-4. Similar training processes as discussed in FIG. 3 can be used to train the file encoder model.

At 520, an LLM is used to process the file embedding vector to generate a source code of the binary code. FIG. 6 illustrates an example training process 600 of the LLM, according to an implementation.

As shown in FIG. 6, a training set of source code sample pairs 642 can be used to train the LLM 620. A source code sample pair 642 includes a source code training sample and a binary code sample. The source code training sample includes the source code of the binary code sample. Multiple source code sample pairs are obtained and form the training dataset.

Alternatively or additionally, data augmentation techniques can be used to generate the training set of source code sample pairs 642. For example, in addition to the source code that generates the binary code sample, the source code can further be processed to generate synthetic source code by making non-substantive changes. These non-substantive changes can include changes to the code that do not affect the output, including e.g., changing parameter names, adding non-executed subroutines or comments, etc. Other obfuscation techniques can also be used to perform the generation of synthetic source code. A synthetic source code can also be paired with the corresponding binary code example in the reference source to generate additional source code sample pairs 642 in the training set. In some cases, a separate LLM can be used to take the input of the source code and generate synthetic source code.

The file encoder model 610 is the same file encoder model described in FIG. 3 and associated descriptions. In operation, each binary code example in a source code sample pair 642 is processed by the file encoder model 410 to generate a file embedding vector 612. The file embedding vector 612 can be paired with the corresponding source code training sample in the source code sample pair 642 to form an embedding sample pair 646. Accordingly, a training set of embedding sample pairs 646 is obtained from the training set of sample pairs 642.

The training set of embedding sample pairs 646 is provided to the LLM 620 for training. In some cases, self-supervised learning or semi-supervised learning can be used to train the LLM 620. The LLM 620 can generate a source code output of a file embedding vector 612 in the embedding sample pair 646, and the source code output is compared to the corresponding source code training sample in the embedding sample pair 646 for evaluation and feedback. The objective of the training is to make the source code output generated by the LLM 620 on the binary code sample to be close to the corresponding source code training sample.

In some implementations, the LLM 620 can be an autoregressive LLM that predicts the next token based on a sequence of tokens. The model architecture of the autoregressive LLM can be modified to take the file embedding vector produced by the file encoder model 610 as an additional input. The LLM 620 can be trained to predict the sequence of tokens that form the source code output. The loss function of the autoregressive LLM can be set to be a cross entropy loss between the predicted token probabilities determined based on the input file embedding vector and the true tokens determined from the source code training sample in the training set of embedding sample pairs 446.

In some cases, the model architecture of the autoregressive LLM can be modified by using an MLP that is trained to take the file embedding vector as input and produce a fixed number of prefix tokens based on the file embedding vector. The fixed number of prefix tokens can be used as the additional input provided to the rest of the layers of the autoregressive LLM. The autoregressive LLM can predict the rest of the source code starting with those prefix tokens.

The training process repeats until a stopping criteria is met. The stopping criteria can be configured. In some cases, the stopping criteria can be a number of training iterations performed. Additionally or alternatively, a validation set can be used to test the LLM 620 and determine validation loss. The training process can stop when the validation loss stops improving.

Returning to FIG. 5, in some cases, the source code output generated by the LLM can be outputted at the user interface of the software service platform that performs the analysis. Alternatively or additionally, the source code output can be sent to a different device for outputting.

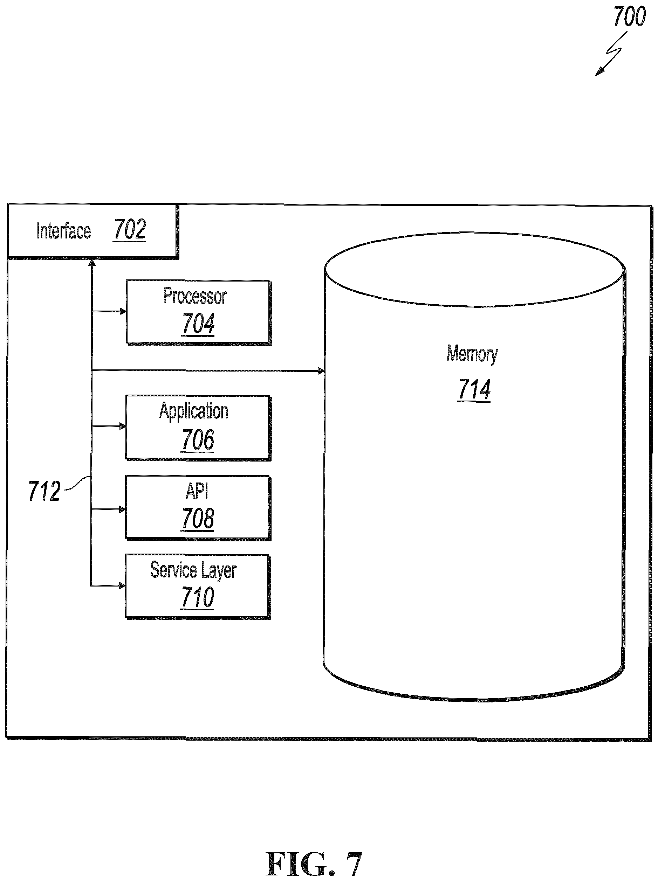

FIG. 7 illustrates a high-level architecture block diagram of a computer 700 according to an implementation. The computer 700 can be implemented as the client device 102, the software service platform, or any combinations thereof. The computer 700 can also be used to implement the operations discussed in FIGS. 1-6. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the processing algorithm of the code package establishment can be implemented in an executable computing code, e.g., C/C++ executable codes. In some cases, the computer 700 can include a standalone Linux system that runs batch applications. In some cases, the computer 700 can include mobile or personal computers.

The computer 700 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 700 can serve as a client, network component, a server, a database, or other persistency, and/or any other components. In some implementations, one or more components of the computer 700 may be configured to operate within a cloud-computing-based environment.

At a high level, the computer 700 is an electronic computing device operable to receive, transmit, process, store, or manage data. According to some implementations, the computer 700 can also include or be communicably coupled with an application server, e-mail server, web server, caching server, streaming data server, business intelligence (BI) server, and/or other server.

The computer 700 can collect data of network events or mobile application usage events over network 110 from a web browser or a client application, e.g., an installed plugin. In addition, data can be collected by the computer 700 from internal users (e.g., from a command console or by another appropriate access method), external or third parties, other automated applications, as well as any other appropriate entities, individuals, systems, or computers.

Each of the components of the computer 700 can communicate using a system bus 712. In some implementations, any and/or all the components of the computer 700, both hardware and/or software, may interface with each other and/or the interface 702 over the system bus 712 using an Application Programming Interface (API) 708 and/or a service layer 710. The API 708 may include specifications for routines, data structures, and object classes. The API 708 may be either computer language-independent or -dependent and refer to a complete interface, a single function, or even a set of APIs. The service layer 710 provides software services to the computer 700. The functionality of the computer 700 may be accessible for all service consumers using this service layer. Software services, such as those provided by the service layer 710, provide reusable, defined business functionalities through a defined interface. For example, the interface may be software written in JAVA, C++, or other suitable languages providing data in Extensible Markup Language (XML) format or other suitable format. While illustrated as an integrated component of the computer 700, alternative implementations may illustrate the API 708 and/or the service layer 710 as stand-alone components in relation to other components of the computer 700. Moreover, any or all parts of the API 708 and/or the service layer 710 may be implemented as child or sub-modules of another software module, enterprise application, or hardware module without departing from the scope of this disclosure.

The computer 700 includes an interface 702. Although illustrated as a single interface 702 in FIG. 7, two or more interfaces 702 may be used according to particular needs, desires, or particular implementations of the computer 700. The interface 702 is used by the computer 700 for communicating with other systems in a distributed environment connected to a network (whether illustrated or not). Generally, the interface 702 comprises logic encoded in software and/or hardware in a suitable combination and operable to communicate with the network. More specifically, the interface 702 may comprise software supporting one or more communication protocols associated with communications such that the network or interface's hardware is operable to communicate physical signals within and outside of the computer 700.

The computer 700 includes at least one processor 704. Although illustrated as a single processor 704 in FIG. 7, two or more processors may be used according to particular needs, desires, or particular implementations of the computer. Generally, the processor 704 executes instructions and manipulates data to perform the operations of the computer 700. Specifically, the processor 704 executes the functionality disclosed in FIGS. 1-6.

The computer 700 also includes a memory 714 that holds data for the computer 700. Although illustrated as a single memory 714 in FIG. 7, two or more memories may be used according to particular needs, desires, or particular implementations of the computer 700. While memory 714 is illustrated as an integral component of the computer 700, in alternative implementations, memory 714 can be external to the computer 700.

The application 706 is an algorithmic software engine providing functionality according to particular needs, desires, or particular implementations of the computer 700, particularly with respect to functionality required for anomaly detection. Although illustrated as a single application 706, the application 706 may be implemented as multiple applications 706 on the computer 700. In addition, although illustrated as integral to the computer 700, in alternative implementations, the application 706 can be external to the computer 700.

There may be any number of computers 700 associated with, or external to, and communicating over a network. Furthermore, this disclosure contemplates that many users may use one computer 700, or that one user may use multiple computers 700.

Described implementations of the subject matter can include one or more features, alone or in combination.

For example, in a first implementation, a method, comprising: processing a binary code by using a file encoder model to obtain a file embedding vector; and selecting one or more source code samples based on the file embedding vector and a distance function.

The foregoing and other described implementations can each, optionally, include one or more of the following features:

A first feature, combinable with any of the following features, wherein the one or more source code samples are selected based on a source code embedding vector of the one or more source code samples, wherein the source code embedding vector and the file embedding vector have a same dimension.

A second feature, combinable with any of the previous or following features, wherein the source code embedding vector is generated by using a text language model.

A third feature, combinable with any of the previous or following features, wherein the file encoder model is trained based on a training set of source code sample pairs, wherein each source code sample pair in the training set includes a source code training sample and a binary code sample.

A fourth feature, combinable with any of the previous or following features, wherein the file encoder model comprises a pretrained embedding model and a translator model.

A fifth feature, combinable with any of the previous or following features, wherein the one or more source code samples are selected by using a k-nearest neighbors algorithm (k-NN).

A sixth feature, combinable with any of the previous features, further comprising: generating a text description of the binary code based on the one or more source code samples by using a large language model (LLM).

In a second implementation, a computer-readable medium containing instructions which, when executed, cause an electronic device to perform operations comprising: processing a binary code by using a file encoder model to obtain a file embedding vector; and selecting one or more source code samples based on the file embedding vector and a distance function.

The foregoing and other described implementations can each, optionally, include one or more of the following features:

A first feature, combinable with any of the following features, wherein the one or more source code samples are selected based on a source code embedding vector of the one or more source code samples, wherein the source code embedding vector and the file embedding vector have a same dimension.

A second feature, combinable with any of the previous or following features, wherein the source code embedding vector is generated by using a text language model.

A third feature, combinable with any of the previous or following features, wherein the file encoder model is trained based on a training set of source code sample pairs, wherein each source code sample pair in the training set includes a source code training sample and a binary code sample.

A fourth feature, combinable with any of the previous or following features, wherein the file encoder model comprises a pretrained embedding model and a translator model.

A fifth feature, combinable with any of the previous or following features, wherein the one or more source code samples are selected by using a k-nearest neighbors algorithm (k-NN).

A sixth feature, combinable with any of the previous features, the operations further comprising: generating a text description of the binary code based on the one or more source code samples by using a large language model (LLM).

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations comprising: processing a binary code by using a file encoder model to obtain a file embedding vector; and selecting one or more source code samples based on the file embedding vector and a distance function.

The foregoing and other described implementations can each, optionally, include one or more of the following features:

A first feature, combinable with any of the following features, wherein the one or more source code samples are selected based on a source code embedding vector of the one or more source code samples, wherein the source code embedding vector and the file embedding vector have a same dimension.

A second feature, combinable with any of the previous or following features, wherein the source code embedding vector is generated by using a text language model.

A third feature, combinable with any of the previous or following features, wherein the file encoder model is trained based on a training set of source code sample pairs, wherein each source code sample pair in the training set includes a source code training sample and a binary code sample.

A fourth feature, combinable with any of the previous or following features, wherein the file encoder model comprises a pretrained embedding model and a translator model.

A fifth feature, combinable with any of the previous or following features, wherein the one or more source code samples are selected by using a k-nearest neighbors algorithm (k-NN).

A sixth feature, combinable with any of the previous features, the operations further comprising: generating a text description of the binary code based on the one or more source code samples by using a large language model (LLM).

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform operations by operating on input data and generating output data. The methods, processes, or logic flows can also be performed by, and computers can also be implemented as, special-purpose logic circuitry, for example, a CPU, an FPGA, or an ASIC, or by a combination of special-purpose logic circuitry and one or more programmed computers.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser), or by interacting with an app running on a user device, e.g., on a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform the operations or actions. That one or more computer programs is configured to perform particular operations or actions means that the one or more programs include instructions that, when executed by data processing apparatus, cause the apparatus to perform the operations or actions. That special-purpose logic circuitry is configured to perform particular operations or actions means that the circuitry has electronic logic that performs the operations or actions.

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. As one example, the processes depicted in the accompanying figures do not necessarily require the particular order shown, or sequential order, to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

The present disclosure also comprises the following enumerated example embodiments (EEEs), which are not claims.
EEE1. A method, comprising:
   processing a binary code by using a file encoder model to obtain a file embedding vector; and
   selecting one or more source code samples based on the file embedding vector and a distance function.
EEE 2. The method of EEE 1, wherein the one or more source code samples are selected based on a source code embedding vector of the one or more source code samples, wherein the source code embedding vector and the file embedding vector have a same dimension.
EEE 3. The method of EEE 2, wherein the source code embedding vector is generated by using a text language model.
EEE 4. The method of EEE 1, wherein the file encoder model is trained based on a training set of source code sample pairs, wherein each source code sample pair in the training set includes a source code training sample and a binary code sample.
EEE 5. The method of EEE 1, wherein the file encoder model comprises a pretrained embedding model and a translator model.
EEE 6. The method of EEE 1, wherein the one or more source code samples are selected by using a k-nearest neighbors algorithm (k-NN).
EEE 7. The method of EEE 1, further comprising: generating a text description of the binary code based on the one or more source code samples by using a large language model (LLM).
EEE 8. A computer-readable medium containing instructions which, when executed, cause an electronic device to perform operations comprising:
   processing a binary code by using a file encoder model to obtain a file embedding vector; and
   selecting one or more source code samples based on the file embedding vector and a distance function.
EEE 9. The computer-readable medium of EEE 8, wherein the one or more source code samples are selected based on a source code embedding vector of the one or more source code samples, wherein the source code embedding vector and the file embedding vector have a same dimension.
EEE 10. The computer-readable medium of EEE 9, wherein the source code embedding vector is generated by using a text language model.
EEE 11. The computer-readable medium of EEE 8, wherein the file encoder model is trained based on a training set of source code sample pairs, wherein each source code sample pair in the training set includes a source code training sample and a binary code sample.
EEE 12. The computer-readable medium of EEE 8, wherein the file encoder model comprises a pretrained embedding model and a translator model.
EEE 13. The computer-readable medium of EEE 8, wherein the one or more source code samples are selected by using a k-nearest neighbors algorithm (k-NN).
EEE 14. The computer-readable medium of EEE 8, the operations further comprising: generating a text description of the binary code based on the one or more source code samples by using a large language model (LLM).
EEE 15. A computer-implemented system, comprising:
   one or more computers; and
   one or more computer memory devices interoperably coupled with the one or more computers and
   having tangible, non-transitory, machine-readable media storing one or more instructions that,
   when executed by the one or more computers, perform one or more operations comprising:
      processing a binary code by using a file encoder model to obtain a file embedding vector; and
      selecting one or more source code samples based on the file embedding vector and a distance function.
EEE 16. The computer-implemented system of EEE 15, wherein the one or more source code samples are selected based on a source code embedding vector of the one or more source code samples, wherein the source code embedding vector and the file embedding vector have a same dimension.
EEE 17. The computer-implemented system of EEE 16, wherein the source code embedding vector is generated by using a text language model.
EEE 18. The computer-implemented system of EEE 15, wherein the file encoder model is trained based on a training set of source code sample pairs, wherein each source code sample pair in the training set includes a source code training sample and a binary code sample.
EEE 19. The computer-implemented system of EEE 15, wherein the file encoder model comprises a pretrained embedding model and a translator model.
EEE 20. The computer-implemented system of EEE 15, wherein the one or more source code samples are selected by using a k-nearest neighbors algorithm (k-NN).

## Claims

1. A method, comprising:
processing a binary code by using a file encoder model to obtain a file embedding vector; and
selecting one or more source code samples based on the file embedding vector and a distance function.

2. The method of claim 1, wherein the one or more source code samples are selected based on a source code embedding vector of the one or more source code samples, wherein the source code embedding vector and the file embedding vector have a same dimension.

3. The method of claim 2, wherein the source code embedding vector is generated by using a text language model.

4. The method of any previous claim, wherein the file encoder model is trained based on a training set of source code sample pairs, wherein each source code sample pair in the training set includes a source code training sample and a binary code sample.

5. The method of any previous claim, wherein the file encoder model comprises a pretrained embedding model and a translator model.

6. The method of any previous claim, wherein the one or more source code samples are selected by using a k-nearest neighbors algorithm (k-NN).

7. The method of any previous claim, further comprising generating a text description of the binary code based on the one or more source code samples by using a large language model (LLM).

8. A computer-readable medium containing instructions which, when executed, cause an electronic device to perform operations as recited in any of claims 1 to 7.

9. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations as recited in any of claims 1 to 7.
